# EUROPÄISCHE PATENTSCHRIFT

(11) **EP 1 206 647 B1**
(45) Veröffentlichungstag und Bekanntmachung des Hinweises auf die Patenterteilung: **10.11.2004**
(21) Anmeldenummer: 00952882.9
(22) Anmeldetag: 01.07.2000
(51) Int. Cl.: F16B 21/20

(54) **SICHERUNGSRING**
CIRCLIP
CIRCLIP

(30) Priorität: 06.08.1999 DE 19936708
(43) Veröffentlichungstag der Anmeldung: 22.05.2002
(73) Patentinhaber: ROBERT BOSCH GMBH, 70442 Stuttgart (DE)
(72) Erfinder: FRAUHAMMER, Karl, D-70771 Leinfelden-Echterdingen (DE); HELLBACH, Manfred, D-70771 Leinfelden-Echterdingen (DE); MUELLER, Frank, D-75392 Deckenpfronn (DE); SCHNERRING, Heinz, D-72135 Dettenhausen (DE); FRIEDRICH, Joerg, D-70771 Leinfelden-Echterdingen (DE); STRASSER, Andreas, D-73635 Rudersberg (DE)
(86) Internationale Anmeldenummer: PCT/DE2000/002149
(87) Internationale Veröffentlichungsnummer: WO 2001/011249

(56) Entgegenhaltungen:
- WO-A-97/12170
- US-A- 3 442 171
- US-A- 5 207 462
- US-A- 5 370 590
- US-A- 5 615 582

## Beschreibung

### Stand der Technik

Die Erfindung geht aus von einem Sicherungsring nach dem Oberbegriff des Anspruchs 1. Es sind schon Sicherungsringe bekannt, die zur axialen Sicherung von Bauteilen wie Lagern, Zahnrädern oder Dichtringen gegenüber Wellen oder Bohrungen dienen. Derartige Sicherungen können zum Eingriff in nach radial innen offene Umfangsnuten in Bohrungen oder in nach radial außen offene Umfangsnuten in Wellen ausgebildet sein. Diese Sicherungsringe gibt es in demontierbarer und nicht demontierbarer Ausführung in verschiedenen Formen. Sie sind auch Gegenstand verschiedener Normen (z. B. DIN, ISO). Die Sicherungsringe sind normalerweise geschlitzt mit Unter- bzw. Übermaß ausgeführt, so dass sie sich nach dem Einsetzten in eine entsprechende Umfangsnut selbsttätig in der Welle bzw. Bohrung unter Vorspannung halten. Aus der WO 79/12170 A ist ein Sicherungsring bekannt, der mit einem Zentrierkörper versehen ist, welcher sich mit radialem Abstand zu einer ringförmig umlaufenden, zwei Schenkel bildenden Spange des Sicherungsrings erstreckt.

Aus H. Roloff/W. Matek: "Maschinenelemente", 5. Auflage, S. 179 geht ein Sicherungsring hervor, der zwei ringförmig umlaufende, eine Spange bildende Schenkel aufweist. Die radialen Querschnitte der beiden Schenkel verjüngen sich zu den freien Enden hin. Dadurch kommt es zu einer gleichmäßigeren Verformung des Sicherungsringes.

### Vorteile der Erfindung

Der erfindungsgemäße Sicherungsring mit den Merkmalen des Anspruchs 1 hat den Vorteil, dass er neben der axialen Sicherungsfunktion zusätzlich eine Zentrierung zwischen einer Bohrung und einer darin einzusetzenden Welle bzw. Achse bei der Montage ermöglicht. Hierdurch kann beispielsweise verhindert werden, dass ein zwischen Bohrung und Welle angeordneter Wellendichtring durch auf der Welle angeordnete scharfe Kanten bzw. Absätze bei der Montage infolge Verkantens von Welle und Bohrung beschädigt wird. Ein vorzeitiger Ausfall der Dichtwirkung des Wellendichtringes wird somit vermieden.

Dadurch, dass der wenigstens eine Steg, über den der Zentrierung mit der Spange des Sicherungsringes verbunden ist, im Bereich des Endes einer der beiden Schenkel des Sicherungsringes angeordnet ist, weist der Sicherungsring eine höhere Verformbarkeit auf.

Durch die in den abhängigen Ansprüchen aufgeführten Maßnahmen sind vorteilhafte Weiterbildungen und Verbesserungen des erfindungsgemäßen Sicherungsrings möglich.

### Zeichnung

Zwei Ausführungsbeispiele der Erfindung sind in der Zeichnung dargestellt und in der nachfolgenden Beschreibung näher erläutert. Es zeigen
Fig. 1 eine Draufsicht auf einen Sicherungsring mit Zentrierfunktion gemäß einem ersten Ausführungsbeispiel (entspricht nicht dem Anspruch 1 der Erfindung),
Fig. 2 eine Draufsicht auf einen erfindungsgemäßen Sicherungsring mit Zentrierfunktion gemäß einem zweiten Ausführungsbeispiel und
Fig. 3 einen Teilschnitt durch einen Bohrhammer, der einen erfindungsgemäßen Sicherungsring mit Zentrierfunktion aufweist.

### Beschreibung

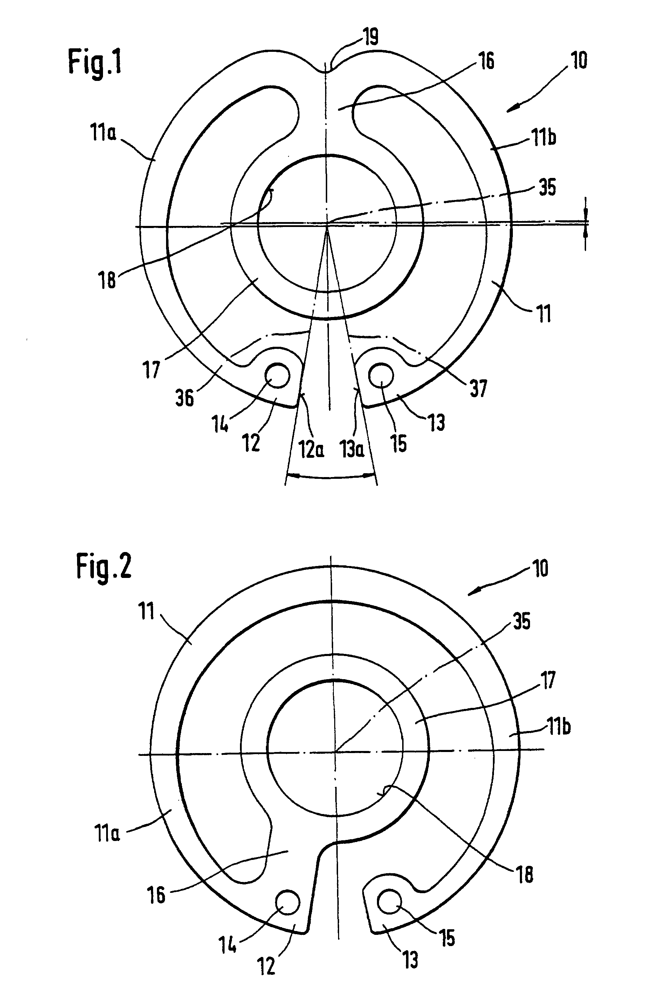

In Fig. 1 ist mit 10 ein Sicherungsring bezeichnet, der eine ringförmig umlaufende, geschlitzte Spange 11 aus federndem Material, insbesondere Federstahl, hat. Die Spange 11 hat an seinen beiden freien Enden Augen 12, 13, in denen jeweils Durchbrüche 14, 15 angeordnet sind. In die Durchbrüche 14, 15 kann bekanntermaßen eine Zange eingesetzt werden, mittels der durch Veränderung des Abstandes der Augen 12, 13 voneinander ein Durchmesser der Spange 11 zwecks Montage des Sicherungsringes 10 veränderbar ist.

Der Sicherungsring 10 in Fig. 1 ist als Innenring für eine nach radial innen offene Umfangsnut ausgebildet und daher zur axialen Sicherung eines Bauteils gegenüber einer Bohrung geeignet. Innerhalb der Spange 11 ist ein Zentrierring 17 angeordnet, der mit der Spange 11 über einen Steg 16 verbunden ist. Der Zentrierring 17 ist mit einer Zentrierbohrung 18 versehen, die etwa konzentrisch zum Sicherungsring 10 und zu einer entsprechenden Umfangsnut, in die der Sicherungsring 10 einsetzbar ist, angeordnet ist. Auf der dem Steg 16 gegenüberliegenden Seite der Spange 11 ist eine Aussparung 19 vorgesehen, die die Spange 11 in zwei Schenkel 11a, b unterteilt. Die Schenkel 11a, b sind mit sich zum freien Ende verjüngendem radialen Querschnitt ausgebildet, so daß sich beim Montieren des Sicherungsringes 10 eine gleichmäßige Verformung ergibt. An einander gegenüberliegenden Flächen der Augen 12, 13 befindet sich je eine Abflachung 12a, 13a, die als gegenseitige Anschlagfläche dient. Die Abflachungen 12a, 13a sind dabei jeweils parallel zu einem durch einen Mittelpunkt 35 des Sicherungsringes 10 verlaufenden Radialstrahl 36, 37 ausgerichtet. Durch die Anschlagflächen ist gewährleistet, daß die Materialbeanspruchung der Spange 11 bei der Montage des Sicherungsrings 10 innerhalb der zulässigen Grenzen gehalten wird.

In Fig. 2 ist ein zweites Ausführungsbeispiel eines Sicherungsrings 10 mit Zentrierfunktion gezeigt. Gleiche und gleichwirkende Teile sind mit gleichen Bezugszeichen gekennzeichnet. Gegenüber dem Ausführungsbeispiel nach Fig. 1 unterscheidet sich das zweite Ausführungsbeispiel nach Fig. 2 dadurch, daß der Steg 16 im Bereich eines Auges 12 angeordnet ist. Der Zentrierring 17 ist dabei ebenfalls von der Spange 11 umgeben, so daß der in Fig. 2 dargestellte Sicherungsring 10 ebenfalls als Innenring ausgebildet ist.

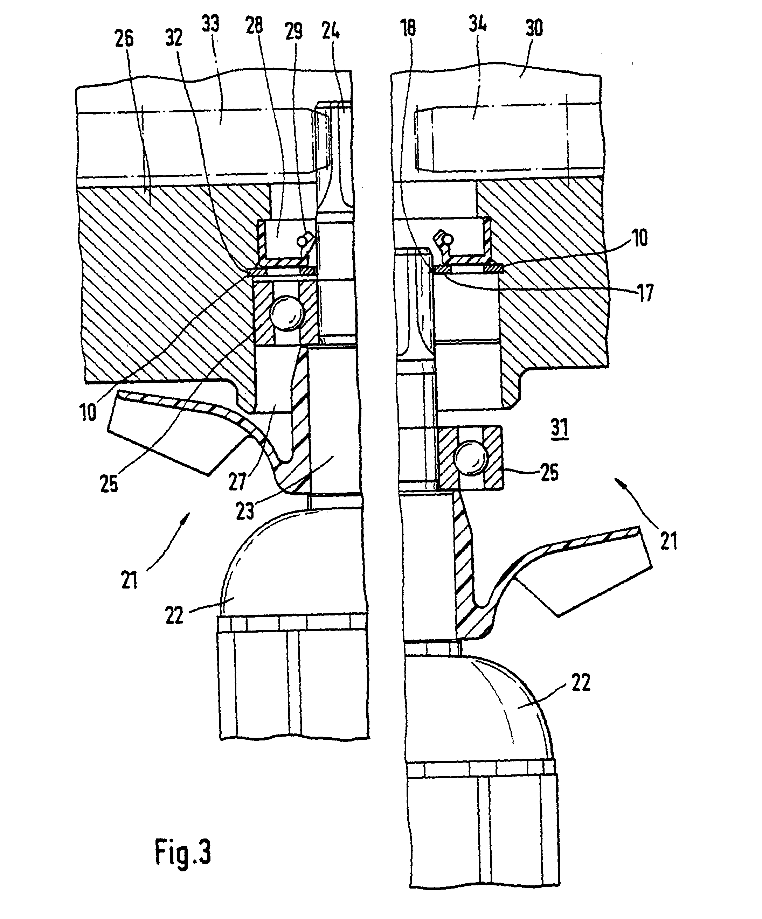

In Fig. 3 ist ein Anwendungsfall für einen erfindungsgemäßen Sicherungsring 10 dargestellt. Fig. 3 zeigt dabei einen Teilschnitt durch eine Antriebseinrichtung 21 eines Bohrhammers. In der linken Bildhälfte der Figur 3 ist die Antriebseinrichtung in einer fertig montierten Stellung dargestellt, während in der rechten Bildhälfte der Fig. 3 die Antriebseinrichtung während des Montagevorgangs gezeigt ist.

Ein Elektromotor 22 hat eine Motorwelle 23, die inseitig mit einem Ankerritzel 24 versehen ist. Die Motorwelle 23 ist dabei über ein Wälzlager 25 gegenüber einem Getriebegehäuse 26 drehbar gelagert. In einer Durchgangsbohrung 27 im Getriebegehäuse 26 sitzt neben dem Wälzlager 25 ein davor angeordneter Dichtring 28, der mit einer Dichtlippe 29 einen Getrieberaum 30 von einem Motorraum 31 abdichtet. Die Dichtlippe 29 liegt dazu am Außenumfang der Motorwelle 23 an (linke Bildhälfte der Fig. 3). Der Dichtring 28 wird innerhalb der Durchgangsbohrung 27 von dem Sicherungsring 10 axial gesichert. Der Sicherungsring 10 sitzt dabei unter Vorspannung in einer Innennut 32 im Getriebegehäuse 26, die ringförmig umläuft.

In der rechten Bildhälfte der Fig. 3 ist die Antriebseinrichtung 21 in ihrer Montagestellung gezeigt. Das Wälzlager 25 ist dabei auf die Motorwelle 23 aufgepreßt und wird zusammen mit der Motorwelle 23 und dem Elektromotor 22 in die Durchgangsbohrung 27 eingesetzt. Hierbei greift das Ankerritzel 24 zunächst durch die Zentrierbohrung 18 im Zentrierring 17 und wird durch diesen radial geführt. Beim weiteren Einsetzen der Antriebseinrichtung 21 gelangt dann das Ankerritzel durch die von den Dichtlippen 29 gebildete Dichtöffnung hindurch tiefer in die Bohrung 27 hinein, bis das Ankerritzel 24 anschließend vollständig wie in der linken Bildhälfte gezeigt in Zahnräder 33, 34 im Getrieberaum 30 eingreift. Aufgrund des Zentrierrings 17, der mit dem Sicherungsring 10 eine Einheit bildet wird verhindert, daß die Dichtlippe beim Einsetzen der Antriebseinrichtung 21 durch das ggf. scharfkantige Ankerritzel 24 beschädigt wird. Die Zentrierbohrung 18 ist hierzu etwa konzentrisch zur Umfangsnut 32 ausgebildet.

Die Erfindung ist nicht auf die gezeigten Ausführungsbeispiele beschränkt. So ist es bei einem als Außenring für Wellen ausgebildeten Sicherungsring auch möglich, daß der Zentrierring außerhalb der Spange diesen umgreift. Anstelle eines Steges können auch mehrere Stege zur Verbindung von Zentrierring und Spange vorgesehen sein.

## Patentansprüche

1. Sicherungsring für Wellen oder Bohrungen, der durch Einrasten in einer Umfangsnut (32) axial festlegbar ist, wobei der Sicherungsring (10) mit einem Zentrierkörper (17) versehen ist, der sich mit radialem Abstand zu einer etwa ringförmig umlaufenden, zwei Schenkel (11a, 11b) bildenden Spange (11) des Sicherungsrings (10) erstreckt, und der Zentrierring (17) über wenigstens einen Steg (16) mit der Spange (11) des Sicherungsrings (10) verbunden ist, **dadurch gekennzeichnet, dass** der wenigstens eine Steg (16) im Bereich des Endes eines Schenkels (11a, 11b) des Sicherungsrings (10) angeordnet ist.

2. Sicherungsring nach Anspruch 1, **dadurch gekennzeichnet, dass** der Zentrierkörper (17) als Zentrierring ausgebildet ist, der eine Zentrierbohrung (18) hat, die bei in der Umfangsnut (32) montiertem Sicherungsring (10) etwa konzentrisch zu der Umfangsnut (32) angeordnet ist.

3. Sicherungsring nach Anspruch 3, **dadurch gekennzeichnet, dass** der Sicherungsring (10) als Innenring für eine nach radial innen offene Umfangsnut (32) ausgebildet ist, wobei die Spange (11) den Zentrierring (17) umgibt.

4. Sicherungsring nach Anspruch 1, **dadurch gekennzeichnet, dass** die Enden der Schenkel (11a, 11b) des Sicherungsrings (10) augenförmig ausgebildet sind.

5. Sicherungsring nach Anspruch 4, **dadurch gekennzeichnet, dass** an einander gegenüberliegenden Flächen der Augen (12, 13) sich je eine Abflachung (12a, 13a) befindet, die gegenseitig als Anschlagfläche dient.

6. Sicherungsring nach Anspruch 5, **dadurch gekennzeichnet, dass** die Abflachungen (12a, 13a) jeweils parallel zu einem durch einen Mittelpunkt (35) des Sicherungsringes (10) verlaufenden Radialstrahl (36, 37) ausgerichtet sind.

7. Sicherungsring nach einem der vorhergehenden Ansprüche, **dadurch gekennzeichnet, dass** der Sicherungsring (10) zur axialen Festlegung eines Dichtrings (28) dient, wobei der Dichtring (28) wenigstens eine Dichtlippe (29) hat, die zur Anlage an einer Welle (23) vorgesehen ist.

## Claims

1. Retaining ring for shafts or bores which can be axially secured by snapping into place in a circumferential groove (32), the retaining ring (10) being provided with a centring body (17) which extends at a radial distance from a clasp (11) of the retaining ring (10), this clasp (11) being roughly in the shape of an encircling ring and forming two legs (11a, 11b), and the centring ring (17) being connected to the clasp (11) of the retaining ring (10) via at least one web (16), **characterized in that** the at least one web (16) is arranged in the region of the end of a leg (11a, 11b) of the retaining ring (10).

2. Retaining ring according to Claim 1, **characterized in that** the centring body (17) is designed as a centring ring which has a centring hole (18) which, when the retaining ring (10) is fitted in the circumferential groove (32), is arranged approximately concentrically to the circumferential groove (32).

3. Retaining ring according to Claim 1, **characterized in that** the retaining ring (10) is designed as an inner ring for a circumferential groove (32) which is open radially inwards, the clasp (11) surrounding the centring ring (17).

4. Retaining ring according to Claim 1, **characterized in that** the ends of the legs (11a, 11b) of the retaining ring (10) are of lug-shaped design.

5. Retaining ring according to Claim 4, **characterized in that** a flat (12a, 13a) is in each case located on surfaces of the lugs (12, 13) which are opposite one another and mutually serves as a stop surface.

6. Retaining ring according to Claim 5, **characterized in that** the flats (12a, 13a) are in each case oriented parallel to a radial half-line (36, 37) running through a centre point (35) of the retaining ring (10).

7. Retaining ring according to one of the preceding claims, **characterized in that** the retaining ring (10) serves to axially secure a sealing ring (28), the sealing ring (28) having at least one sealing lip (29) which is provided for bearing against a shaft (23).

## Revendications

1. Circlip pour arbres ou perçages, pouvant être fixé axialement par encliquetage dans une rainure périphérique (32),
le circlip (10) étant équipé d'un corps de centrage (17) qui s'étend à une certaine distance radiale vis-à-vis d'une agrafe (11) du circlip (10), laquelle est disposée à peu près en forme d'anneau et forme deux branches (11a, 11b), et l'anneau de centrage (17) étant relié, par au moins une entretoise (16), à l'agrafe (11) du circlip (10),
**caractérisée en ce que**
l'entretoise (16) est disposée au voisinage de l'extrémité d'une branche (11a, 11b) du circlip (10).

2. Circlip selon la revendication 1,
**caractérisé en ce que**
le corps de centrage (17) a la forme d'un anneau de centrage, ayant un perçage de centrage (18) qui, lorsque le circlip (10) se trouve monté dans la rainure périphérique (32), est disposé de manière à peu près concentrique vis-à-vis de la rainure périphérique (32).

3. Circlip selon la revendication 3,
**caractérisé en ce que**
le circlip (10) a la forme d'un anneau interne pour une rainure périphérique (32) ouverte radialement vers l'intérieur, alors que l'agrafe (11) entoure l'anneau de centrage (17).

4. Circlip selon la revendication 1,
**caractérisé en ce que**
les extrémités des branches (11a, 11b) du circlip (10) ont la forme d'oeillets.

5. Circlip selon la revendication 4,
**caractérisé en ce que**
sur chacune des faces opposées des oeillets (12, 13) se trouve un méplat (12a, 13a) qui sert de surface d'arrêt opposée.

6. Circlip selon la revendication 5,
**caractérisé en ce que**
chacun des méplats (12a, 13a) est disposé parallèlement à un rayon radial (36, 37) passant par un centre (35) du circlip (10).

7. Circlip selon l'une des revendications précédentes,
**caractérisé en ce que**
le circlip (10) sert à la fixation axiale d'un joint d'étanchéité (28), qui possède au moins une lèvre d'étanchéité (29) prévue pour être posée contre un arbre (23).
